# EUROPEAN PATENT SPECIFICATION

(11) **EP 3 936 713 B1**
(45) Date of publication and mention of the grant of the patent: **18.12.2024**
(21) Application number: 19918579.4
(22) Date of filing: 08.03.2019
(51) Int. Cl.: F02M 25/00, F02D 19/06, F02D 41/00, F02D 19/10, F02D 41/34, F02B 17/00, F02M 21/02

(54) **DIESEL ENGINE**
DIESELMOTOR
MOTEUR DIESEL

(43) Date of publication of application: 12.01.2022
(73) Proprietor: JFE Engineering Corporation, Chiyoda-ku, Tokyo 100-0011 (JP)
(72) Inventor: SHIMIZU, Akira, Tokyo 100-0005 (JP); KUWAHARA, Takaaki, Tokyo 100-0005 (JP)
(74) Representative: Twelmeier Mommer & Partner
(86) International application number: PCT/JP2019/009315
(87) International publication number: WO 2020/183522

(56) References cited:
- EP-A1- 3 670 878
- WO-A1-2011/132604
- WO-A1-2011/136151
- JP-A- 2009 097 419
- JP-A- 2013 113 153
- JP-A- 2013 113 153
- JP-A- H01 318 716
- US-A1- 2010 288 211

## Description

### Technical Field

The present invention relates to a diesel engine, and more specifically to a diesel engine suitable for use as a diesel engine for ships that uses, as a main fuel, a fuel oil such as a heavy oil or a light oil, and especially effective for reducing carbon dioxide CO₂ (greenhouse effect gas) through the combustion of ammonia NH₃ which does not include carbon (C) (i.e., carbon-free), which has not been used as a fuel in conventional techniques. A diesel engine according to the preamble of claim 1 is disclosed in EP 3 670 878 A1, US 2010/288211 A1, JP 2013 113153 A, and JP H01 318716 A.

### Background Art

When ammonia is combusted, ammonia generates no CO₂ because it is carbon-free. Thus, the combustion of ammonia in an internal combustion engine (a diesel engine, in particular) has been attempted. Ammonia, however, is flame-retardant because its ignition temperature is 651°C, which is higher compared, for example, to a heavy oil which have an ignition temperature of 250 to 380°C. Thus, the combustion rate of ammonia is low, and currently, 20% or more of the charged ammonia is emitted as unburned combustibles.

In order to solve such a problem, attempts to increase ammonia combustion efficiency have been made by reforming part of ammonia, for example, using a catalyst so as to produce hydrogen, charging the obtained hydrogen into a combustion chamber together with ammonia, and using the highly combustible hydrogen as an ignition source.

In Patent Literature 1, for example, in order to enable combustion of high-temperature hydrogen-rich ammonia and combustion air, a carbon-free power unit is configured to produce a high-temperature hydrogen-rich gas by: feeding urea water as a raw material for hydrogen-rich ammonia; producing high-temperature ammonia from the urea water; and adding part of the ammonia to hydrogen andnitrogen. That is, Patent Literature 1 relates to a hydrogen-rich ammonia production reactor for producing a high-temperature hydrogen-rich gas by producing high-temperature ammonia from urea water and adding part of the obtained ammonia to hydrogen and nitrogen .

In Patent Literature 2, ammonia is reformed to produce a reformed gas containing hydrogen, and the reformed gas, in addition to ammonia, is fed into a combustion chamber of an ammonia combustion internal combustion engine.

### Citation List

### Patent Literature

Patent Literature 1: Japanese Patent No. 5315493
Patent Literature 2: Japanese Patent No. 5310945

### Summary of Invention

### Technical Problem

An object of the present invention is to provide a diesel engine that reduces CO₂ emission by increasing the combustion rate of ammonia with a relatively simple configuration.

### Solution to Problem

According to an aspect of the present invention, there is provided a diesel engine including: a combustion chamber; and a fuel charging unit that charges a fuel oil, used as an ignition source, and gaseous ammonia into the combustion chamber. In this diesel engine, an ammonia premixed gas is formed in the combustion chamber by the fuel charging unit, and the ammonia premixed gas is subjected to mixed combustion. The diesel engine includes a control unit configured to control the formation of the ammonia premixed gas so that a concentration of ammonia in the combustion chamber becomes higher in an area closer to an inner side wall surface of the combustion chamber, than in a central portion of the combustion chamber.

This eliminates the need to subject ammonia to mixed combustion with, for example, hydrogen by providing, for example, a device for reforming ammonia into hydrogen with a special catalyst. Thus, a diesel engine that reduces CO₂ emissions by increasing the combustion rate of ammonia with a simple configuration can be provided.

As a second aspect, the control unit may preferably adjust an air excess ratio to be lower than an air excess ratio at a time of operation only with a fuel oil.

According to the invention, the combustion chamber includes a cylinder head, the cylinder head is provided with an ammonia feeding path, ammonia injection holes are provided at multiple locations closer to the inner side wall surface of the combustion chamber than the central portion of the combustion chamber, and vaporized ammonia is controlled so as to be charged into the combustion chamber in an intake stroke.

As a fourth aspect, in any one of the first to third aspects, a gas valve that adjusts a charged amount of ammonia and a fuel injection valve that adjusts a feed amount of the fuel oil may preferably be provided, and the control unit may preferably control at least one of the gas valve and the fuel injection valve.

As a fifth aspect, in any one of the first to fourth aspects, the charged amount of ammonia may preferably be adjusted so as to be 15% or more and 25% or less of the feed amount of the fuel oil in terms of a heat quantity ratio.

As a sixth aspect, in any one of the first to fifth aspects, a deviation of the ammonia concentration at the inner side wall surface of the combustion chamber may preferably be set to 70% or more relative to an average concentration in the combustion chamber.

As a seventh aspect, in the second aspect, the air excess ratio may preferably be adjusted to be higher by 0.5 to 1.0 than the air excess ratio at the time of operation only with the fuel oil.

As an eighth aspect, in the second or seventh aspect, the adjustment of the air excess ratio may preferably be performed by adjusting an amount of air with an adjustment unit provided in an exhaust bypass of a supercharger.

### Brief Description of Drawings

FIG. 1 is a cross-sectional view showing a schematic configuration of a portion around a cylinder head in a diesel engine used in experiments by the present inventors.
FIG. 2 is a diagram showing changes in combustion temperature distribution caused by changes in air excess ratio according to an experiment conducted by the present inventors.
FIG. 3 is a diagram showing, in a comparative manner, temperature distributions and in-cylinder pressures when air excess ratios λ = 2.0 and 1.7 according to an experiment conducted by the present inventors.
FIG. 4 is a diagram showing, in a comparative manner, in-cylinder pressures and heat generation rate caused by changes in air excess ratio according to an experiment conducted by the present inventors.

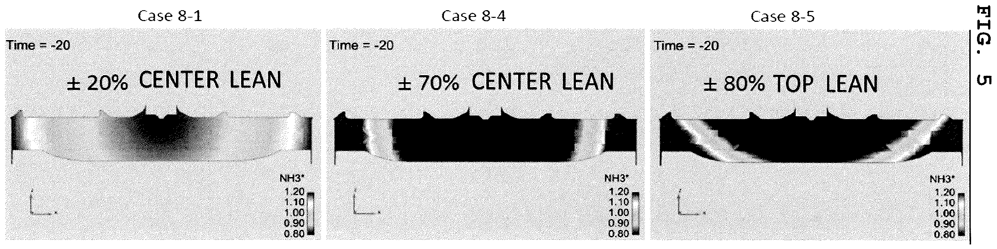

FIG. 5 is a diagram showing, in a comparative manner, degrees of ammonia stratification according to an experiment conducted by the present inventors.
FIG. 6 shows, in a comparative manner, in-cylinder pressures and heat generation rates according to the degrees of ammonia stratification according to an experiment conducted by the present inventors.
FIG. 7 is a cross-sectional view showing an overall configuration according to an embodiment of the present invention.
FIG. 8 is a perspective view showing an ammonia feeding system according to the embodiment of the present invention.
FIG. 9 is a plan view showing arrangements of ammonia injection holes according to the embodiment of the present invention.
FIG. 10 is a diagram showing ammonia injection timing according to the embodiment of the present invention.
FIG. 11 is a cross-sectional view showing a configuration of the check valve according to the embodiment of the present invention.
FIG. 12 is a cross-sectional view showing arrangements and motion of a poppet of a check valve according to the embodiment of the present invention.
FIG. 13 is a diagram showing an example of a distribution for a degree of stratification in a combustion chamber according to the embodiment of the present invention.

### Description of Embodiments

An embodiment of the present invention will be described below in detail with reference to the drawings.

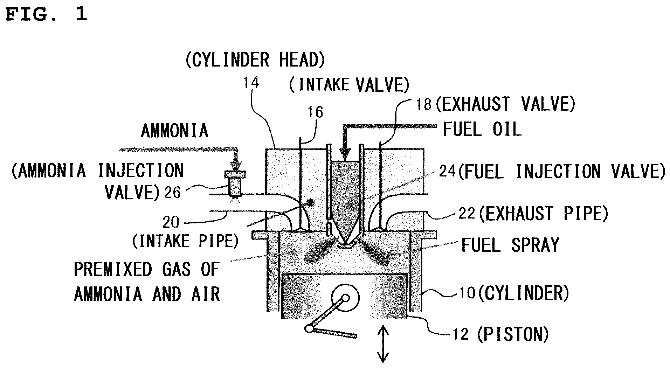

The present inventors took an analytical approach to study a method for a diesel engine provided with a mechanical fuel injector as shown in FIG. 1. In the diesel engine such as this, a premixed gas of ammonia and air (also referred to simply as a premixed gas) is produced by spraying ammonia into an intakepipe 20 from an ammonia injection valve 26 (a gas valve) so that the ammonia is mixed with the intake for the engine, and in which engine the premixed gas of ammonia and air is subjected to mixed combustion with a fuel oil, which is a main fuel injected from a fuel injection valve 24, such as a heavy oil or a light oil, being used as an ignition source.

In FIG. 1, the reference numeral 10 denotes a cylinder, the such as a heavy oil or a light oil, being used as an ignition source.

In FIG. 1, the reference numeral 10 denotes a cylinder, the reference numeral 12 denotes a piston, the reference numeral 14 denotes a cylinder head, the reference numeral 16 denotes an intake valve, the reference numeral 18 denotes an exhaust valve, and the reference numeral 22 denotes an exhaust pipe.

Specifically, a combustion chamber based on an actual engine (bore × stroke = 400 mm × 500 mm, four-stroke) was modeled, and combustion simulation was conducted. Ammonia in a gaseous state was fed into the intake pipe 20 at 20% in terms of a heat quantity ratio, and the ammonia premixed gas was combusted through the injection of the main fuel oil (a heavy oil or a light oil) from the fuel injection valve 24. Using an ammonia concentration distribution in the premixed gas, an injection pressure of the main fuel oil, an injection pattern, and an air excess ratio as parameters, their effects on the characteristics of exhaust gas, efficiency, and unburned ammonia were investigated. The results of the investigation are shown in Table 1.

**[Table 1]**

| case | FUEL | AIR EXCESS RATIO *λ* | EFFICIENCY | | NO ₓ | | UNBURNED NH₃ | CO₂ REDUCTION |
|---|---|---|---|---|---|---|---|---|
| | | | DIAGRAMMATIC REPRESENTATION | DEVIATION | CONCENTRATION | DEVIATION | | |
| 1 | 100% HEAVY OIL | 3.2 | 45.8% | - | 657ppm | - | 0 | 0 |
| 4 | 80% HEAVY OIL | 3.2 | 44.5% | -2.8% | 468ppm | -29% | 37% | -10.2% |
| 5 | | 2.5 | 45.7% | -0.1% | 415ppm | -37% | 27% | -14.4% |
| 5-1 | 20% NH₃ | 2.0 | 45.3% | -1.0% | 460ppm | -30% | 21% | -14.9% |
| 5-2 | | 1.7 | 38.6% | -16% | 863ppm | +31% | 22% | +0.3% |

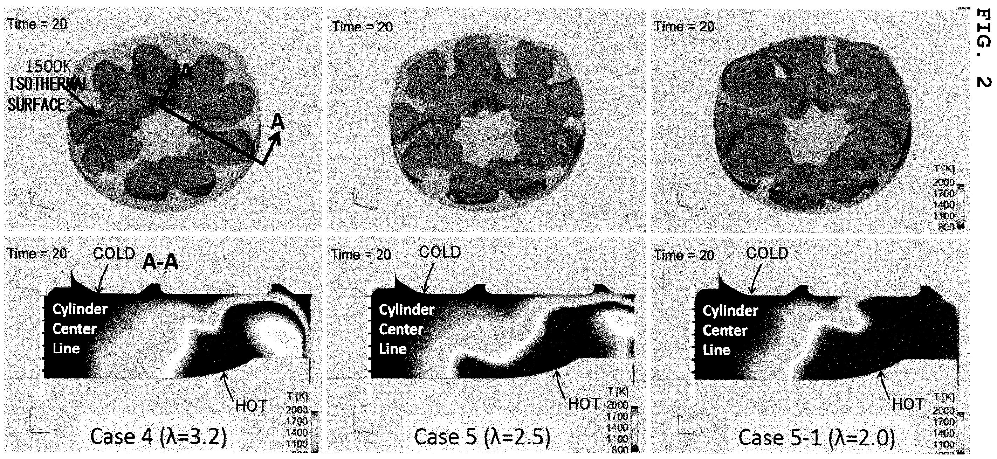

In a case (case 4) where ammonia NH₃ was charged at 20% in terms of a heat quantity ratio with an air excess ratio of λ = 3.2 (equivalent to that in a case (case 1) operated by 100% heavy oil without the supply of ammonia), the amount of unburned ammonia was 37%, thus, only achieving a combustion rate of about 60% . Calculation was then made for a case (case 5) where the air excess ratio λ was adjusted to 2.5 (toward a richer mixture), and the amount of unburned ammonia was 27%, thus confirming that the combustion rate was improved by about 10%. Such improvement can be considered as the result of an increase in the combustible range of ammonia premixed gas due to an increase in combustion temperature as shown in FIG. 2. In order to figure out reduction rates of the amount of unburned ammonia and changes in various performances when the air excess ratio λ was reduced, calculations when λ = 3.2 (case 4), λ = 2.5 (case 5), λ = 2.0 (case 5-1), and λ = 1.7 (case 5-2) were made. As calculation conditions, the premixed gas had a uniform concentration, and the main fuel oil injection timing was fixed at 9.5 deg. BTDC.

High combustion temperature refers to a temperature sufficiently higher than the ignition temperature of ammonia and that is capable of raising the combustion rate, although such a temperature varies depending on the specification and ambient temperature of the diesel engine. As a guideline, the high temperature refers to a combustion temperature of about 1500 K, for example.

According to the results, it was found that the unburned ammonia can be reduced to 21% by adjusting the air excess ratio toward a richer (fuel richer) mixture so as to be λ = 2.0 in the case 5-1. In the range of λ = 2.0 to 3.2, no significant changes were observed with regard to efficiency and NOₓ.

When the air excess ratio λ was adjusted to 1.7 toward a richer mixture in the case 5-2, however, combustion delay rapidly occurred due to lack of air and reduction in compression pressure. The maximum combustion pressure was reduced by 2.5 MPa, and the efficiency deteriorated by 7% accordingly. Note however that the combustion temperature was maintained high, and the amount of unburned ammonia was 22%, that is, substantially equivalent to that when λ = 2.0. The maximum combustion temperature was higher by 70°C than that when λ = 2.0 (in the case 5-1) and maintained for a long period of time, thus resulting in an increase of the NOₓ value by 400 ppm. Furthermore, although the efficiency reduction and the amount of unburned ammonia were equivalent to those when λ = 2.0 (in the case 5-1), the reduction rate of CO₂ deteriorated by about 15%. Based on these findings, it was concluded that an air excess ratio λ around 2.0 is optimal for 20% ammonia-mixed combustion.

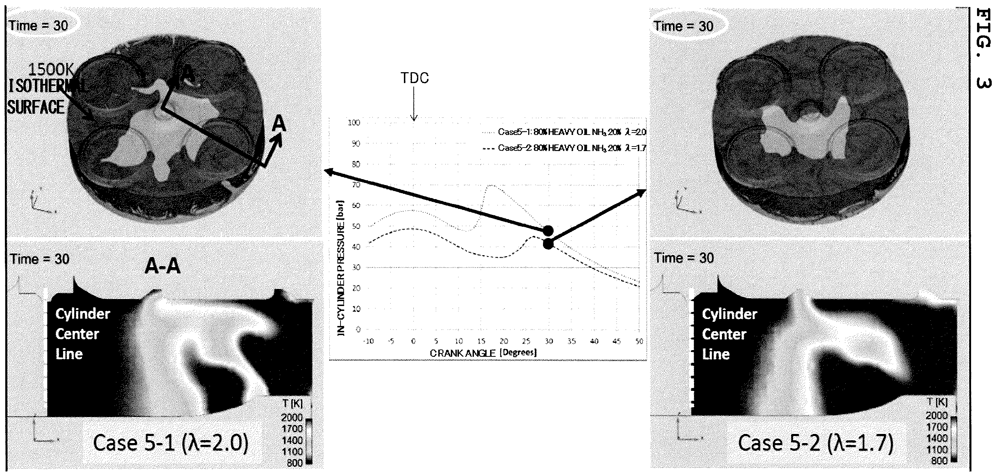

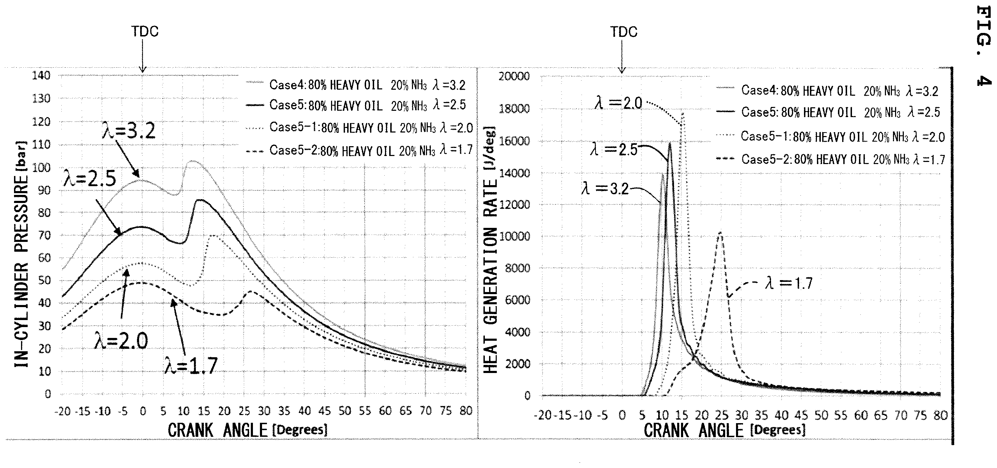

FIG. 2 shows changes in combustion temperature distribution caused by changes in air excess ratio λ. FIG. 3 shows the comparisons of temperature distributions and in-cylinder pressures (with the horizontal axis representing engine crank angles (deg.), and the vertical axis representing in-cylinder pressures) when λ = 2.0 (in the case 5-1) and λ = 1.7 (in the case 5-2) . FIG. 4 shows comparison among in-cylinder pressures caused by changes in air excess ratio λ.

The influence of fuel injection timing was investigated next.

When the air excess ratio λ is varied with a constant fuel injection timing, the smaller the value of λ, the lower the compression pressure. Thus, with a constant main fuel injection timing, the maximum combustion pressure is also on a downward trend. In order to maintain the efficiency and keep the combustion temperature, fuel injection timing needs to be adjusted in accordance with λ (the amount of air, or boost pressure). Comparisons were made between a case with λ = 2.5 and injection timing of 17.5 deg. BTDC and a case with λ= 2.0 and injection timing of 19.5 deg. BTDC. The maximum combustion pressures had a difference of around 1 MP, but those had values equivalent to that of an ordinary diesel engine. For the case of the latter adjustment, it can be recognized, based on its heat generation rate, that satisfactory combustion was obtained. Accordingly, the amount of unburned ammonia also decreased to 11.5%, i.e., decreased by half. Based on this, it was found that adjusting fuel injection timing in accordance with respective combustion conditions and keeping the maximum combustion pressure at a level equivalent to that of a diesel engine with the standard specification are desirable.

The influence of degrees of ammonia stratification was investigated next.

Since combustion temperature rises in the vicinity of a cylinder inner wall surface (hereinafter, also referred to simply as a wall surface) in combustion by means of main fuel oil injection, we made a hypothesis that increasing the concentration of ammonia in the vicinity of the wall surface, within the premixed gas of ammonia and air, which is flame-retardant, would be effective to reduce the amount of unburned ammonia. In order to verify the validity of the hypothesis, combustion calculations were made for three cases where a concentration difference (referred to as a degree of stratification) between a central portion of the cylinder combustion chamber and the wall surface portion was set to ±20% (case 8-1), ±70% (linear concentration gradient: case 8-4) and ±80% (lean at the top of the combustion chamber: case 8-5), as shown in Table 2. Note that in these calculations, λ = 2.0 and fuel injection timing of 19.5 degree, BTDC were common to all the cases.

**[Table 2]**

| case | FUEL | DEGREE OF STRATIFICATION (WALL SURFACE RICH) | INJECTION TIMING | EFFICIENCY | | NOₓ | | UNBURNED NH₃ | CO₂ REDUCTION |
|---|---|---|---|---|---|---|---|---|---|
| | | | | DIAGRAMMATIC REPRESENTATION | DEVIATION | CONCENTRATION | DEVIATION | | |
| 1 | 100% HEAVY OIL | 0 | -9.5 | 45.8% | - | 657ppm | - | 0 | 0 |
| 8-1 | | ±20% | -19.5 | 51.4% | +12% | 476ppm | -28% | 11.5% | -26.7% |
| 8-4 | 80% HEAVY OIL | ±70% | -19.5 | 52.0% | +14% | 599ppm | -8.8% | 6.2% | -29.5% |
| | 20% NH₃ | | | | | | | | |
| 8-5 | | ±80% | -19.5 | 53.7% | +17% | 592ppm | -9.9% | 6.2% | -31.8% |

In the case 8-1 with a degree of stratification of ±20%, the amount of unburned ammonia was 11.5%, which shows little reduction as compared to the case of the uniform mixture. When the degree of stratification was raised to ±70% (in the case 8-4), the amount of unburned ammonia was 6.2%, thus achieving a significant improvement effect. In the case 8-5 with a degree of stratification of ±80%, the amount of unburned ammonia was substantially equivalent to that in the case 8-4 under the conditions of ±70%, but the combustion efficiency was slightly better, which indicates an efficiency improvement by 1.7%. For the other exhaust gas components, both of the cases 8-4 and 8-5 contained nitrous oxide N₂O at 115 ppm and particulate matters PM at 0.005 g/KWh. A significant reduction was exhibited in PM, in particular.

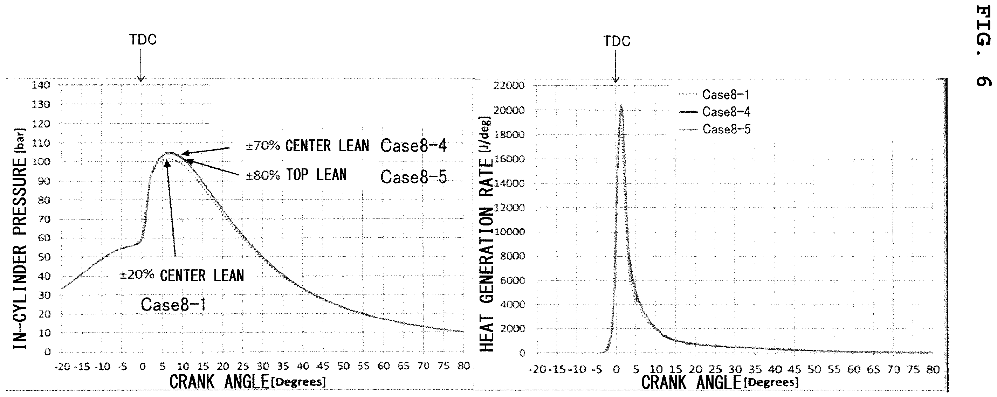

FIG. 6 shows, in a comparative manner, in-cylinder pressures and heat generation rates according to the degrees of ammonia stratification when λ = 2.0 with the horizontal axis representing engine crank angles deg.

In the production of the premixed gas of ammonia and air, in order to obtain a uniform premixed gas, these methods were employed: providing the ammonia injection valve 26, which is a gas valve, in the intake pipe 20 located in front of the cylinder head 14 shown in FIG. 1 and feeding ammonia into the intake pipe 20, so that mixing is performed in the intake pipe 20; and feeding the premixed gas in a more uniform state to the cylinder 10 through the intake valve 16.

In such a conventional method of producing a premixed gas, however, limitations are imposed around 20% for the creation of non-uniformity (the degree of stratification) in the premixed gas even when swirl is created by a gas valve equipped with a nozzle. In this case, the amount of ammonia to be combusted in a high-temperature part of the combustion chamber is insufficient, thus leaving about 10 to 20% ammonia unburned.

According to the present invention, ammonia is fed simultaneously with air through a gas valve into a diesel engine that mainly uses a fuel oil while conducting flow control so that the concentration of ammonia is rich around a cylinder inner wall surface where the main combustion of the fuel oil combustion occurs and where the combustion temperature becomes high, in order to improve the combustion efficiency.

For the degree of ammonia stratification (the degree of concentration difference, or imbalance), a significant deviation of 70% or more is provided in the high-temperature part of the diesel main combustion region. This cannot be achieved when a gas mixer is installed before a combustion chamber as in the typical production of premixed gases, or when ammonia is charged in the vicinity of the intake pipe 20, in each cylinder as shown in FIG. 1.

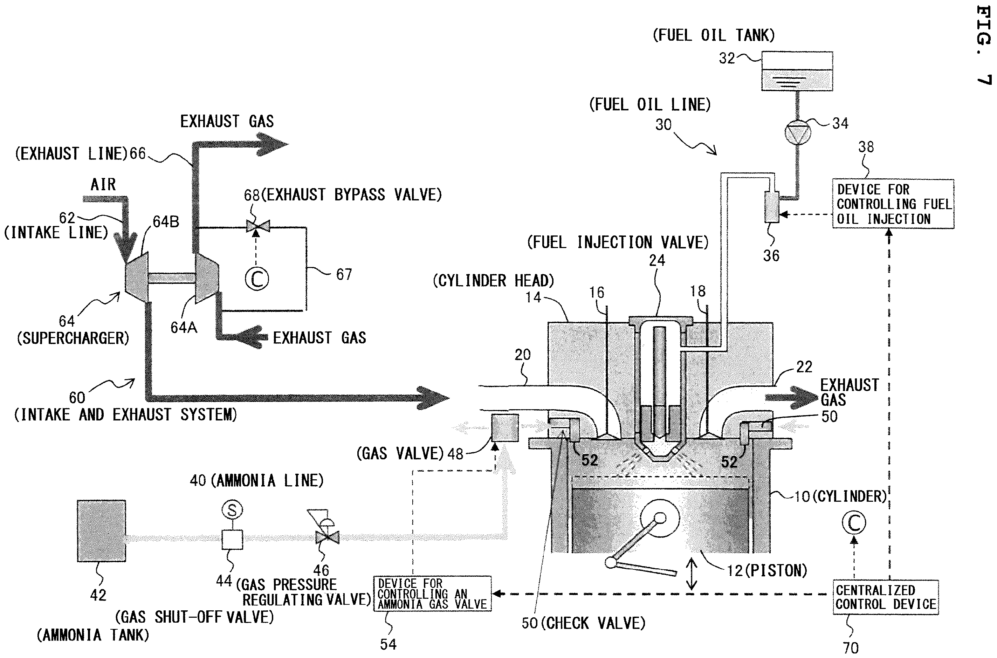

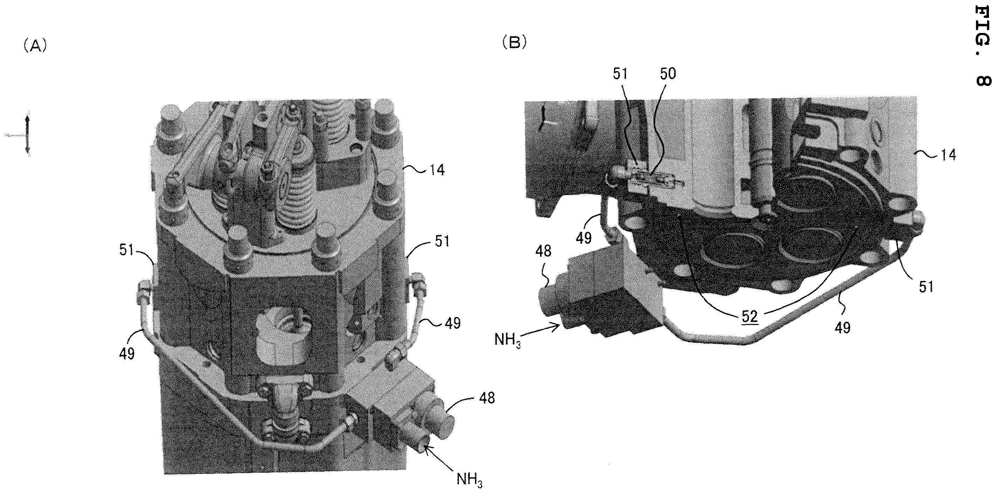

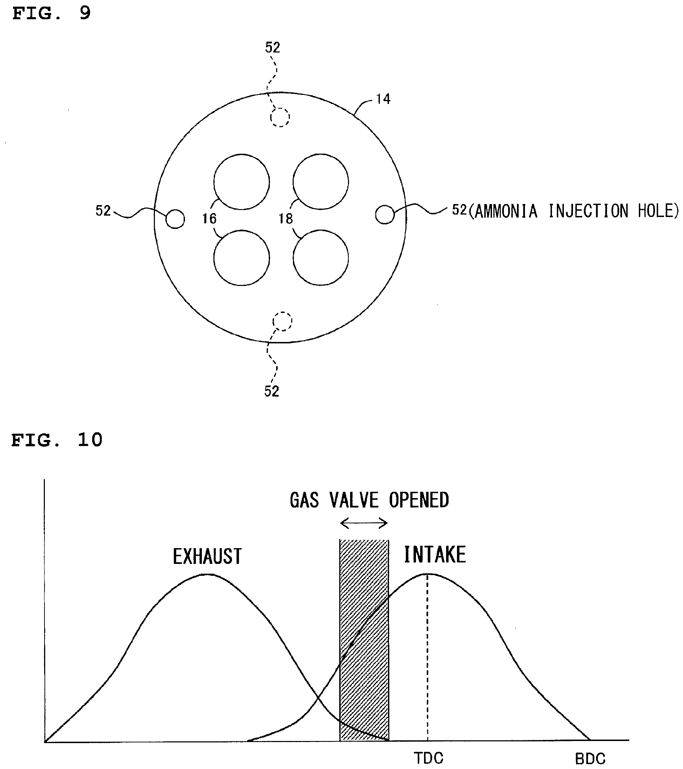

In view of this, according to the present embodiment, an ammonia feeding path (referred to as an ammonia line) 40 is provided in a cylinder head 14 in an ammonia combustion diesel engine as shown in FIG. 7. Vaporized ammonia is charged in an intake stroke through ammonia injection holes 52 provided at multiple locations (two locations illustrated by way of example in FIGS. 8 and 9 in the present embodiment) closer to an inner side wall surface of a combustion chamber, rather than to a central portion of the combustion chamber. This enables the achievement of a degree of stratification of 70% or more, which has been impossible to achieve with the conventional method.

Note that the locations where the multiple ammonia injection holes are formed, as used herein, assuming that a distance from the center of the combustion chamber to the inner side wall surface of the combustion chamber corresponds to 100%, preferably fall within a distance range of 70% to 90%.

In addition, in order to raise the combustion temperature higher, the air excess ratio is set to be richer than the conventional value by Δλ = 0.5 to 1.0.

The ammonia line 40 is configured to include an ammonia tank 42, a gas shut-off valve 44, a gas pressure regulating valve 46, a gas valve 48, a pipe 49, a check valve 50, a connector 51, and the ammonia injection hole 52.

In the figure, the reference numeral 30 denotes a fuel oil line including a fuel oil tank 32, a fuel feed pump 34, and a solenoid valve 36. The reference numeral 60 denotes a intake and exhaust system including: an intake line 62; a supercharger 64 equipped with an intake turbine 64B to be rotated by an exhaust turbine 64A; an exhaust line 66; and an exhaust bypass valve 68 provided in a bypass line 67 connecting between the front and rear sides of the exhaust turbine 64A along the exhaust line 66.

The solenoid valve 36 is controlled by a device 38 for controlling fuel oil injection. The gas valve 48 is controlled by a device 54 for controlling an ammonia gas valve. The device 38 for controlling fuel oil injection, the device 54 for controlling an ammonia gas valve, and the exhaust bypass valve 68 are controlled by a centralized control device 70.

The device 38 for controlling fuel oil injection, the device 54 for controlling an ammonia gas valve, the exhaust bypass valve 68, and the centralized control device 70 together constitute a control unit.

Although ammonia is retained in liquid form in the ammonia tank 42, the ammonia is vaporized and supplied in a gaseous state. The gas pressure thereof is regulated by the gas pressure regulating valve 46, and the flow rate thereof is controlled by the gas valve 48 so as to achieve a predetermined heat quantity ratio (around 20%). Such ammonia is fed to the engine at predetermined intake timing illustrated by way of example in FIG. 10. The gas valve 48 is provided in each cylinder 10. Ammonia controlled by the gas valve 48 is distributed by the pipes 49 shown in FIG. 8 and sent to the plurality of ammonia injection holes 52 through the connectors 51. The portion of the connector 51 is provided with the check valve 50 so as to prevent the back flow of combustion gas at the time of combustion.

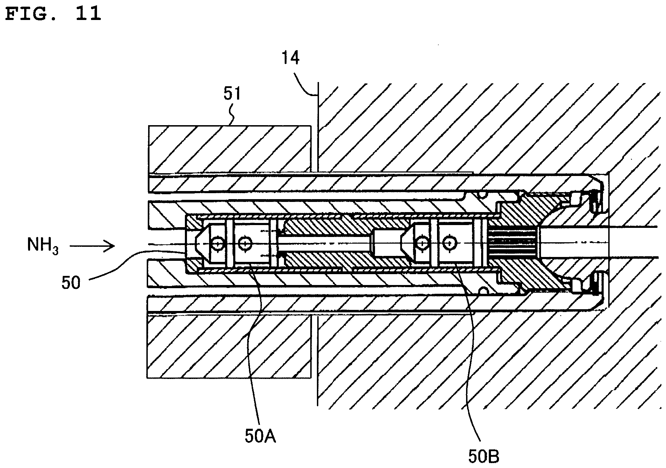

As shown in FIG. 11 in detail, the check valve 50 is a double-poppet check valve having two poppets 50A and 50B. The reason why the double-poppet check valve is employed here is to prevent the possibility that a sealing portion becomes worn with long-term use and thus leakage occurs.

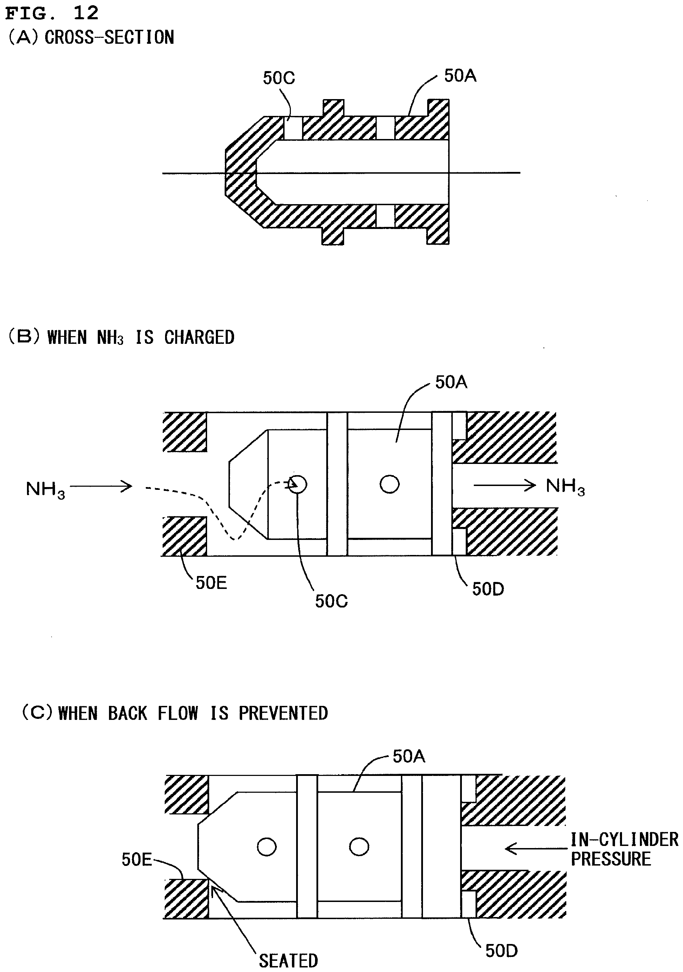

As illustrated in an example of the poppet 50A in FIG. 12 (A), holes 50C are provided on the side surface of each of the poppets 50A and 50B. The poppets 50A and 50B move in a horizontal direction in the figure as in when NH₃ is charged (shown in FIG. 12(B)) and when the back flow is prevented (shown in FIG. 12(C)) to prevent the back flow of NH₃. That is, at the time of charging NH₃ (shown in FIG. 12 (B)), the poppets 50A and 50B move in the right direction in the figure by being pushed by the pressure of NH₃ until the poppets 50A and 50B abut against a stopper 50D. Thus, NH₃ flows in the right direction through an opening of a seating part 50E. At the time of preventing back flow (shown in FIG. 12(C)), on the other hand, the poppets 50A and 50B are pushed in the left direction by in-cylinder pressure. Consequently, the poppets 50A and 50B are seated on the seating part 50E, and sealing is thus achieved.

Since the double-poppet check valve is employed in the present embodiment, leakage can be reliably prevented from occurring. Note that a type of check valve is not limited thereto.

Ammonia thus charged through the ammonia injection holes 52 in the intake stroke can have a degree of stratification of 70% or more on the wall surface. Note that the number of the ammonia injection holes 52 is not limited to two. The number of the ammonia injection holes 52 may be four as shown in FIG. 9 with broken lines, or six, for example.

The diesel main fuel is subjected to flow control by the device 38 for controlling fuel oil injection so as to have a predetermined heat quantity ratio (around 80%) and injected via the fuel injection valve 24 at predetermined timing.

The air excess ratio λ is adjusted to a predetermined value by controlling an amount of exhaust to be passed via the exhaust bypass valve 68 provided on the exhaust turbine 64A side of the supercharger 64. That is, in order to make the air excess ratio λ rich by reducing an amount of air, the exhaust bypass value 68 is closed a little to lower the number of revolutions of the intake turbine 64B, and thereby reduce the amount of air.

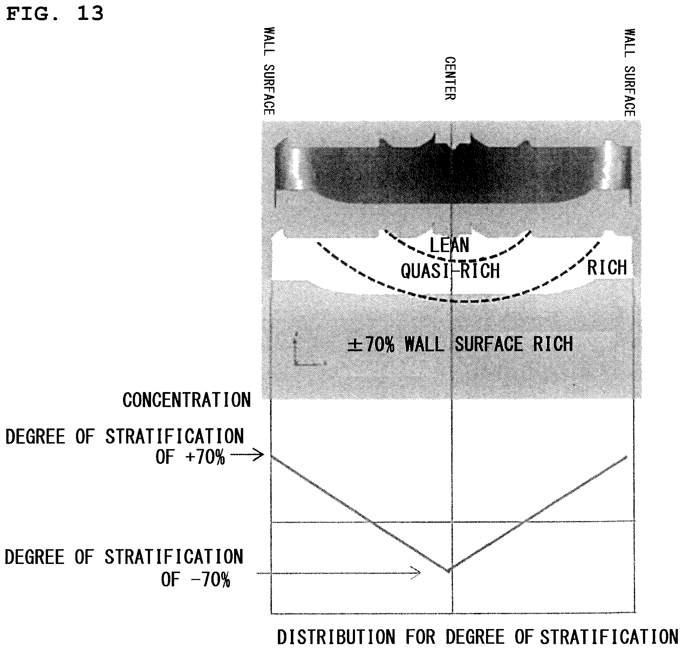

As illustrated by way of example in FIG. 13, the degree of stratification of the premixed gas is set to around -70% in the central portion and to around +70% in the wall surface portion relative to the concentration average value of the premixed gas of ammonia and air.

The combustion temperature becomes high in the wall surface portion. Thus, the combustion rate of ammonia increases by concentrating ammonia near the wall surface portion.

Although the mechanical fuel injector is employed in the above-described embodiment, an electronic injection common-rail fuel injector can be employed instead. Moreover, the configurations of the ammonia line and the intake and exhaust system are not limited to those in the embodiment.

Although the present invention is applied to a diesel engine for ships in the above-described embodiment, the application target of the present invention is not limited thereto. The present invention can be similarly applied also to a diesel engine that uses a light oil as a fuel, or an engine that combines compression ignition as in a diesel engine with spark ignition as in a gasoline engine.

### Industrial Applicability

The present invention is especially effective when used as an engine for an ammonia tanker for transporting ammonia, but the application target thereof is not limited thereto.

### Reference Signs List

- 10: cylinder
- 12: piston
- 14: cylinder head
- 16: intake valve
- 18: exhaust valve
- 20: intake pipe
- 22: exhaust pipe
- 24: fuel injection valve
- 30: fuel oil line
- 32: fuel oil tank
- 34: fuel feed pump
- 36: solenoid valve
- 38: device for controlling fuel oil injection
- 40: ammonia line
- 42: ammonia tank
- 44: gas shut-off valve
- 46: gas pressure regulating valve
- 48: gas valve
- 50: check valve
- 52: ammonia injection hole
- 54: device for controlling ammonia gas valve
- 60: intake and exhaust system
- 62: intake line
- 64: supercharger
- 66: exhaust line
- 68: exhaust bypass valve
- 70: centralized control device

## Claims

1. A diesel engine comprising:
a combustion chamber in a cylinder head(14);
a fuel charging unit that charges a fuel oil, used as an ignition source, and gaseous ammonia into the combustion chamber, so as to form an ammonia premixed gas in the combustion chamber, and the ammonia premixed gas is subjected to mixed combustion,
**characterized in that** the diesel engine further comprises a control unit(38,54,70) configured to control the formation of the ammonia premixed gas so that a concentration of ammonia in the combustion chamber becomes higher in an area closer to an inner side wall surface of the combustion chamber, than in a central portion of the combustion chamber, and wherein
the cylinder head(14) is provided with an ammonia feeding path(40), ammonia injection holes(52) are provided at multiple locations closer to the inner side wall surface of the combustion chamber than the central portion of the combustion chamber, and vaporized ammonia is controlled so as to be charged into the combustion chamber in an air supply stroke.

2. The diesel engine according to claim 1, wherein the control unit adjusts an air excess ratio to be lower than an air excess ratio at a time of operation only with a fuel oil.

3. The diesel engine according to claim 1 or 2, comprising a gas valve (48) that adjusts a charged amount of ammonia and a fuel injection valve(24) that adjusts a feed amount of the fuel oil, and wherein the control unit (38, 54, 70) controls at least one of the gas valve (48) and the fuel injection valve(24).

4. The diesel engine according to any one of claims 1 to 3, wherein a charged amount of ammonia is adjusted so as to be 15% or more and 25% or less of a feed amount of the fuel oil in terms of a heat quantity ratio.

5. The diesel engine according to any one of claims 1 to 4, wherein a deviation of the ammonia concentration at the inner side wall surface of the combustion chamber is set to 70% or more relative to an average concentration in the combustion chamber.

6. The diesel engine according to claim 2, wherein the air excess ratio is adjusted to be higher by 0.5 to 1.0 than the air excess ratio at the time of operation only with the fuel oil.

7. The diesel engine according to claim 2 or 6, wherein adjustment of the air excess ratio is performed by adjusting an amount of air with an adjustment unit provided in an exhaust bypass(67) of a supercharger(64).

## Patentansprüche

1. Dieselmotor mit:
einem Brennraum in einem Zylinderkopf (14);
einer Brennstoffbeschickungseinheit, die ein als Zündquelle verwendetes Brennöl und gasförmiges Ammoniak in den Brennraum einfüllt, um ein vorgemischtes Ammoniakgas in der Verbrennungskammer zu bilden, und das vorgemischte Ammoniakgas einer vermischten Verbrennung unterzogen wird,
**dadurch gekennzeichnet, dass** der Dieselmotor zudem eine Steuereinheit (38, 54, 70) aufweist, die dafür ausgelegt ist, die Bildung des vorgemischten Ammoniakgases so zu steuern, dass eine Ammoniakkonzentration in dem Brennraum in einem Bereich, der näher an einer inneren Seitenwandfläche des Brennraums liegt, höher wird als in einem zentralen Abschnitt der Verbrennungskammer, und wobei
der Zylinderkopf (14) mit einem Ammoniak-Zuführungspfad (40) versehen ist, Ammoniak-Einspritzlöcher (52) an mehreren Stellen vorgesehen sind, die näher an der inneren Seitenwandfläche des Brennraums liegen als der zentrale Bereich des Brennraums, und verdampftes Ammoniak so gesteuert wird, dass es in einem Luftzufuhrhub in die Verbrennungskammer geladen wird.

2. Dieselmotor nach Anspruch 1, wobei die Steuereinheit ein Luftüberschussverhältnis so einstellt, dass es niedriger ist als ein Luftüberschussverhältnis zum Zeitpunkt des Betriebs nur mit einem Heizöl.

3. Dieselmotor nach Anspruch 1 oder 2, mit einem Gasventil (48), das eine zugeführte Ammoniakmenge einstellt, und einem Kraftstoffeinspritzventil (24), das eine Zufuhrmenge des Brennöls einstellt, und wobei die Steuereinheit (38, 54, 70) mindestens eines von Gasventil (48) und Kraftstoffeinspritzventil (24) steuert.

4. Dieselmotor nach einem der Ansprüche 1 bis 3, wobei eine zugeführte Ammoniakmenge so eingestellt ist, dass sie in Bezug auf ein Wärmemengenverhältnis 15 % oder mehr und 25 % oder weniger einer Zufuhrmenge des Brennöls beträgt.

5. Dieselmotor nach einem der Ansprüche 1 bis 4, wobei eine Abweichung der Ammoniakkonzentration an der inneren Seitenwandfläche des Brennraums von einer durchschnittlichen Konzentration im Brennraum auf 70 % oder mehr eingestellt ist.

6. Dieselmotor nach Anspruch 2, wobei das Luftüberschussverhältnis so eingestellt ist, dass es um 0,5 bis 1,0 höher ist als das Luftüberschussverhältnis zum Zeitpunkt des Betriebs nur mit dem Brennöl.

7. Dieselmotor nach Anspruch 2 oder 6, wobei die Einstellung des Luftüberschussverhältnisses durch Einstellen einer Luftmenge mit einer Einstelleinheit erfolgt, die in einem Abgasbypass (67) eines Turboladers (64) vorgesehen ist.

## Revendications

1. Moteur diesel comprenant
une chambre de combustion dans une culasse (14) ;
une unité de chargement de carburant qui charge un mazout, utilisé comme source d'allumage, et ammoniac gazeux dans la chambre de combustion, de manière à former un gaz ammoniac prémélangé dans la chambre de combustion, et le gaz ammoniac prémélangé est soumis à une combustion mixte,
**caractérisé par le fait que** le moteur diesel comprend en outre une unité de commande (38, 54, 70) configurée pour commander la formation du gaz ammoniac prémélangé de sorte qu'une concentration d'ammoniac dans la chambre de combustion devienne plus élevée dans une zone plus proche d'une surface de paroi latérale intérieure de la chambre de combustion que dans une partie centrale de la chambre de combustion, et dans lequel
la culasse (14) est pourvue d'une voie d'alimentation en ammoniac (40), des trous d'injection d'ammoniac (52) sont prévus à plusieurs endroits plus proches de la surface de paroi latérale intérieure de la chambre de combustion que de la partie centrale de la chambre de combustion, et l'ammoniac vaporisé est contrôlé de manière à être chargé dans la chambre de combustion lors d'une course d'alimentation en air.

2. Moteur diesel selon la revendication 1, dans lequel l'unité de commande ajuste un rapport d'excès d'air pour qu'il soit inférieur à un rapport d'excès d'air au moment du fonctionnement uniquement avec un mazout.

3. Moteur diesel selon les revendications 1 ou 2, comprenant une vanne de gaz (48) qui ajuste une quantité d'ammoniac chargée et une vanne d'injection de carburant (24) qui ajuste une quantité d'alimentation du mazout, et dans lequel l'unité de commande (38, 54, 70) commande au moins l'une de la vanne de gaz (48) et de la vanne d'injection de carburant (24).

4. Moteur diesel selon l'une des revendications 1 à 3, dans lequel une quantité d'ammoniac chargée est ajustée de manière à représenter 15 % ou plus et 25 % ou moins d'une quantité d'alimentation du mazout en termes de rapport de quantité de chaleur.

5. Moteur diesel selon l'une des revendications 1 à 4, dans lequel un écart de la concentration d'ammoniac à la surface de paroi latérale intérieure de la chambre de combustion est déterminé à 70 % ou plus par rapport à une concentration moyenne dans la chambre de combustion.

6. Moteur diesel selon la revendication 2, dans lequel le rapport d'excès d'air est ajusté pour être plus élevé de 0,5 à 1,0 que le rapport d'excès d'air au moment du fonctionnement uniquement avec le mazout.

7. Moteur diesel selon la revendication 2 ou 6, dans lequel le réglage du rapport d'excès d'air est effectué en ajustant une quantité d'air avec une unité de réglage fournie dans une dérivation d'échappement (67) d'un surcompresseur (64).
